# EUROPÄISCHE PATENTANMELDUNG

(11) **EP 1 882 841 A2**
(43) Veröffentlichungstag der Anmeldung: **30.01.2008**
(21) Anmeldenummer: 07013063.8
(22) Anmeldetag: 04.07.2007
(51) Int. Cl.: F02D 41/40

(54) **Verfahren zur Erkennung einer Voreinspritzung**

(30) Priorität: 26.07.2006 DE 102006034513
(71) Anmelder: MTU FRIEDRICHSHAFEN GMBH, 88045 Friedrichshafen (DE)
(72) Erfinder: Kloos, Albert, 88045 Friedrichshafen (DE); Kunz, Andreas, 88048 Friedrichshafen (DE); Schmidt, Günther, 88046 Friedrichshafen (DE); Speetzen, Ralf, 88048 Friedrichshafen (DE); Willmann, Michael, 88697 Bermatingen (DE)

(57) **Zusammenfassung**

Vorgeschlagen wird ein Verfahren zur Erkennung einer Voreinspritzung bei einer Brennkraftmaschine (1) mit einem Common-Railsystem einschließlich Einzelspeichern (7), bei dem ein Einzelspeicher-Druckverlauf (pE) in einem Messintervall detektiert wird, hieraus ein Spritzende der Haupteinspritzung bestimmt wird, bei dem in Abhängigkeit des Spritzendes über eine mathematische Funktion ein virtueller Spritzbeginn der Haupteinspritzung berechnet wird und bei dem der virtuelle Spritzbeginn als Ist-Spritzbeginn der Haupteinspritzung gesetzt wird. Als erste Lösung gemäß der Erfindung ist dadurch gekennzeichnet, dass bei aktivierter Voreinspritzung für die Haupteinspritzung ein Ist-Spritzverzug in Abhängigkeit des Ist-Spritzbeginns bestimmt wird, eine Spritzverzug-Abweichung von einem Soll-Spritzverzug zum Ist-Spritzverzug berechnet wird und anhand der Spritzverzug-Abweichung erkannt wird, ob eine Voreinspritzung stattgefunden hat.

## Beschreibung

Die Erfindung betrifft ein Verfahren zur Erkennung einer Voreinspritzung bei einer Brennkraftmaschine mit einem Common-Railsystem einschließlich Einzelspeichern nach dem Oberbegriff von Anspruch 1 oder Anspruch 5.

Bei einer Brennkraftmaschine bestimmen-der Spritzbeginn und das Spritzende maßgeblich die Güte der Verbrennung und die Zusammensetzung des Abgases. Um die gesetzlichen Grenzwerte einzuhalten, werden diese beiden Kenngrößen üblicherweise von einem elektronischen Motorsteuergerät geregelt. Eine weitere Maßnahme besteht in einer Voreinspritzung, welche die Druckanstiegsgeschwindigkeit im Zylinder und damit die mechanische Belastung der Bauteile reduziert.

Aus der DE 103 44 181 A1 ist ein Steuerungsverfahren für eine Brennkraftmaschine mit einem Common-Railsystem einschließlich Einzelspeichern bekannt, bei dem der Einzelspeicher-Druckverlauf detektiert und ein Spritzende hieraus bestimmt wird. Anhand des Spritzendes wird dann über eine mathematische Funktion ein virtueller Spritzbeginn berechnet. Letzterer wird dann als Ist-Spritzbeginn für den weiteren Betrieb der Brennkraftmaschine gesetzt. Bezüglich einer Voreinspritzung sind der Fundstelle keine Angaben zu entnehmen.

Der Erfindung liegt die Aufgabe zu Grunde, das zuvor beschriebene Verfahren im Hinblick auf eine sichere Erkennung einer Voreinspritzung bei einer Brennkraftmaschine mit einem Common-Railsystem einschließlich Einzelspeichern weiter zu entwickeln.

Die Aufgabe wird durch ein Verfahren mit den Merkmalen von Anspruch eins und durch ein Verfahren mit den Merkmalen von Anspruch 5 gelöst. Die Ausgestaltungen sind in den Unteransprüchen dargestellt.

Beiden Lösungen liegt die Erkenntnis zu Grunde, dass eine Voreinspritzung Einfluss auf den Spritzbeginn der Haupteinspritzung ausübt, da der Injektorzustand bei Beginn der Haupteinspritzung davon abhängt ob eine Voreinspritzung stattgefunden hat. Im Mittelpunkt der ersten Lösung steht der Spritzverzug der Haupteinspritzung, während im Mittelpunkt der zweiten Lösung der Spritzbeginn-Unterschied bei einer Haupteinspitzung mit aktivierter Voreinspritzung und einer Haupteinspritzung mit deaktivierter Voreinspritzung steht. Der Spritzverzug ist jene Zeitdifferenz (Totzeit) von Ausgabe des Bestromungsbeginns an den Injektor durch das elektronische Motorsteuergerät bis zum tatsächlichen Spritzbeginn.

Konkret besteht die erste Lösung darin, dass bei aktivierter Voreinspritzung für die Haupteinspritzung ein Ist-Spritzverzug in Abhängigkeit des Ist-Spritzbeginns bestimmt wird und eine Spritzverzug-Abweichung von einem Soll-Spritzverzug zum Ist-Spritzverzug berechnet wird. Anhand der Spritzverzug-Abweichung wird dann festgelegt, ob eine Voreinspritzung stattgefunden hat. Eine Voreinspritzung hat stattgefunden, wenn die Spritzverzug-Abweichung innerhalb eines Toleranzbands liegt bzw. keine Voreinspritzung hat stattgefunden, wenn die Spritzverzug-Abweichung außerhalb des Toleranzbands liegt. Der Soll-Spritzverzug wird über ein Kennfeld in Abhängigkeit eines Raildrucks und einer Motordrehzahl festgelegt.

Die zweite Lösung besteht darin, dass, nachdem bei aktivierter Voreinspritzung ein Ist-Spritzbeginn für eine Haupteinspritzung bestimmt wurde, die Voreinspritzung deaktiviert wird. Danach wird der Einzelspeicher-Druckverlauf in einem zweiten Messintervall detektiert und hieraus ein zweites Spritzende der Haupteinspritzung bestimmt. In Abhängigkeit des zweiten Spritzendes wird dann über eine mathematische Funktion ein zweiter virtueller Spritzbeginn der Haupteinspritzung berechnet und der zweite virtuelle Spritzbeginn als zweiter Ist-Spritzbeginn der Haupteinspritzung gesetzt. Anschließend wird eine Ist-Spritzbeginnabweichung aus erstem Ist-Spritzbeginn zum zweitem Ist-Spritzbeginn berechnet. Anhand der Ist-Spritzbeginnabweichung wird festgelegt, ob eine Voreinspritzung stattgefunden hat. Eine Voreinspritzung hat stattgefunden, wenn die Ist-Spritzbeginnabweichung innerhalb eines Toleranzbands liegt bzw. keine Voreinspritzung hat stattgefunden, wenn die Ist-Spritzbeginnabweichung außerhalb des Toleranzbands liegt.

Beiden Lösungen ist gemeinsam, dass mit Erkennen, dass keine Voreinspritzung stattgefunden hat, eine Bestomungsdauer der Voreinspritzung ausgehend von einem ersten Wert schrittweise solange erhöht wird, bis eine Voreinspritzung stattgefunden hat. Aus Sicherheitsgründen wird die Bestromungsdauer der Voreinspritzung nur bis auf einen Maximalwert erhöht. Sollte dann immer noch keine Voreinspritzung stattgefunden haben, so wird der Bestromungsbeginn der Haupteinspritzung vorzugsweise nach spät verschoben.

Beiden Lösungen ist ebenfalls gemeinsam, dass mit Erkennen, dass eine Voreinspritzung stattgefunden hat, der Bestromungsbeginn der Haupteinspritzung angepasst wird.

Die erfindungsgemäßen Lösungen sind sichere Verfahren, da das Verhalten der Haupteinspritzung ausgewertet wird und nicht die Voreinspritzung selbst. Bekanntermaßen ist die Auswertung der Voreinspritzung auf Grund des Signal-Rauschabstands und der Signaldauer stark fehlerbehaftet.

Die Erfindung kann während des Betriebs der Brennkraftmaschine eingesetzt werden, da die Reaktion der Brennkraftmaschine eindeutig erkannt wird. Zudem ist eine zielführende, zylinderindividuelle Injektordiagnose möglich, wodurch der Austauschzeitraum eines Injektors verlängert wird. Als reine Software-Lösung kann die Erfindung nachträglich appliziert werden.

In den Zeichnungen sind die bevorzugten Ausführungsbeispiele dargestellt.

Es zeigen:
- Fig. 1: ein Systemschaubild;
- Fig. 2: einen Programm-Ablaufplan der ersten Lösung;
- Fig. 3: einen Programm-Ablaufplan der zweitern Lösung;
- Fig. 4: einen Programm-Ablaufplan eines Unterprogramms und
- Fig. 5: einen Programm-Ablaufplan eines Unterprogramms.

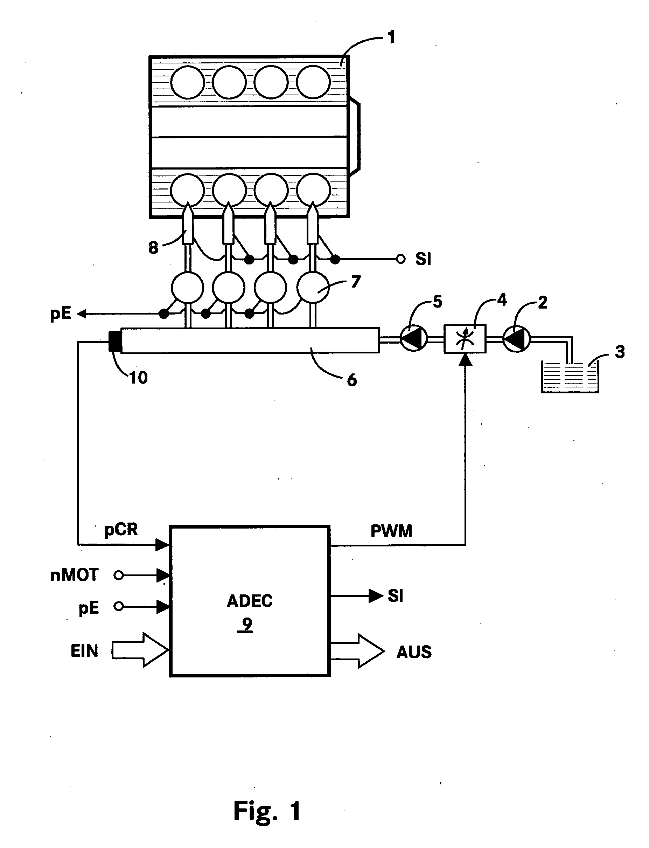

Die Figur 1 zeigt ein Systemschaubild einer elektronisch gesteuerten Brennkraftmaschine 1. Bei dieser wird der Kraftstoff über ein Common-Railsystem eingespritzt. Dieses umfasst folgende Komponenten: eine Niederdruck-Pumpe 2 zur Kraftstoff-Förderung aus einem Kraftstofftank 3, eine Saugdrossel 4 zur Festlegung eines Volumenstroms, eine Hochdruck-Pumpe 5 zur Förderung des Kraftstoffs unter Druckerhöhung in ein Rail 6, Einzelspeicher 7 zum Zwischenspeichern des Kraftstoffs und Injektoren 8 zum Einspritzen des Kraftstoffs in die Brennräume der Brennkraftmaschine 1.

Das Common-Railsystem mit Einzelspeichern unterscheidet sich von einem konventionellen Common-Railsystem darin, dass der einzuspritzende Kraftstoff aus dem Einzelspeicher 7 entnommen wird, indem die Energie für eine Einspritzung aus der Kraftstoff-Volumenelastizität des Kraftstoffs im Einzelspeicher entnommen wird. Die Zulaufleitung vom Rail 6 zum Einzelspeicher 7 ist in der Praxis so ausgelegt, dass eine Rückkoppelung von Störfrequenzen in das Rail 6 gedämpft wird. Während der Einspritzpause fließt gerade soviel Kraftstoff aus dem Rail 6 nach, dass der Einzelspeicher 7 zu Beginn der Einspritzung wieder gefüllt ist, d.h. der Druck im Einzelspeicher 7 entspricht wieder dem Raildruck pCR. Der hydraulische Widerstand des Einzelspeichers 7 und der Zulaufleitung sind aufeinander abgestimmt, d.h. die Verbindungsleitung vom Rail 6 zum Einzelspeicher 7 besitzt einen möglichst hohen hydraulischen Widerstand. Bei einem konventionellen Common-Railsystem ohne Einzelspeicher soll der hydraulische Widerstand zwischen dem Rail 6 und dem Injektor 8 möglichst gering sein um eine ungehinderte Einspritzung zu erreichen.

Die Betriebsweise der Brennkraftmaschine 1 wird durch ein elektronisches Steuergerät (ADEC) 9 geregelt. Das elektronische Steuergerät 9 beinhaltet die üblichen Bestandteile eines Mikrocomputersystems, beispielsweise einen Mikroprozessor, I/O-Bausteine, Puffer und Speicherbausteine (EEPROM, RAM). In den Speicherbausteinen sind die für den Betrieb der Brennkraftmaschine 1 relevanten Betriebsdaten in Kennfeldern/Kennlinien appliziert. Über diese berechnet das elektronische Steuergerät 9 aus den Eingangsgrößen die Ausgangsgrößen. In Figur 1 sind exemplarisch folgende Eingangsgrößen dargestellt: der Raildruck pCR, der mittels eines Rail-Drucksensors 10 gemessen wird, ein Drehzahl-Signal nMOT der Brennkraftmaschine 1, Drucksignale pE der Einzelspeicher 7 und eine Eingangsgröße EIN. Unter der Eingangsgröße EIN sind beispielsweise das Signal eines Klopfsensors, der Ladeluftdruck eines Turboladers und die Temperaturen der Kühl-/Schmiermittel sowie des Kraftstoffs subsumiert.

In Figur 1 sind als Ausgangsgrößen des elektronischen Steuergeräts 9 ein Signal PWM zur Steuerung der Saugdrossel 4, ein Stellsignal SI zur Ansteuerung des Injektors 8, typischerweise der Bestromungsbeginn BB und die Bestromungsdauer BD, und eine Ausgangsgröße AUS dargestellt. Die Ausgangsgröße AUS steht stellvertretend für die weiteren Stellsignale zur Steuerung und Regelung der Brennkraftmaschine 1.

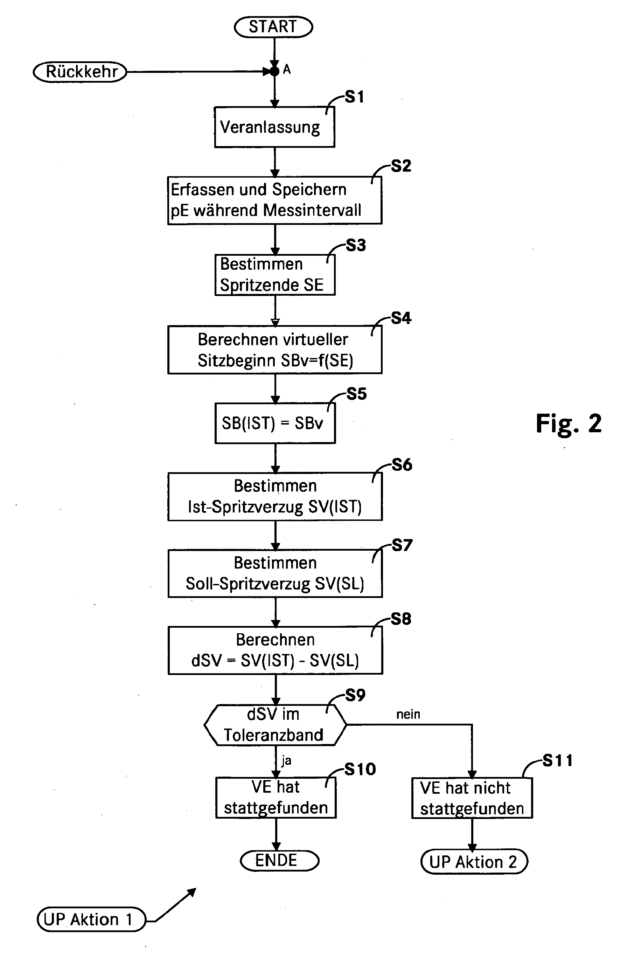

Die Figur 2 zeigt einen Programm-Ablaufplan der ersten erfindungsgemäßen Lösung, bei welcher der Spritzverzug der Haupteinspritzung das zentrale Element darstellt. Der Spritzverzug ist jene Zeitdifferenz (Totzeit) von Ausgabe des Bestromungsbeginns an den Injektor durch das elektronische Motorsteuergerät bis zum tatsächlichen Spritzbeginn. Bei S1 erfolgt eine Veranlassung, d. h. eine Prüfung, ob eine Voreinspritzung stattgefunden hat. Dieser Programm-Ablauf erfolgt somit bei aktivierter Voreinspritzung. Die Veranlassung kann entweder zeit- oder ereignisgesteuert sein, beispielsweise wenn mittels eines Klopfsensors ein signifikanter Druckanstieg dp/dt im Zylinder erkannt wird. Im Anschluss an die Veranlassung bei S2 wird der Einzelspeicher-Druckverlauf pE einer Haupteinspritzung über ein Messintervall erfasst und gespeichert. Das Messintervall kann einem Arbeitsspiel der Brennkraftmaschine gleich 720 Grad Kurbelwellenwinkel entsprechen. Bei S3 wird aus dem erfassten Einzelspeicher-Druckverlauf pE das Spritzende SE bestimmt. Danach wird bei S4 aus dem Spritzende SE über eine mathematische Funktion ein virtueller Spritzbeginn SBv berechnet, wie dies aus der DE 103 44 181 A1 bekannt ist. Bei S5 wird der virtuelle Spritzbeginn SBv als Ist-Spritzbeginn SB(IST) für das weitere Verfahren gesetzt. Im Anschluss daran wird bei S6 ein Ist-Spritzverzug SV(IST) der Haupeinspritzung berechnet. Dieser bestimmt sich aus der Zeitdifferenz von ausgegebenen Bestromungsbeginn der Haupteinspritzung zum Ist-Spritzbeginn SB(IST). Bei S7 wird ein Soll-Spritzverzug SV(SL) über ein Kennfeld in Abhängigkeit des Raildrucks pCR und der Motordrehzahl nMOT festgelegt. Aus dem Ist-Spritzverzug SV(IST) und dem Soll-Spritzverzug SV(SL) wird dann bei S8 eine Spritzverzug-Abweichung dSV bestimmt und bei S9 geprüft, ob dieser innerhalb eines vorgegebenen Toleranzbands liegt.

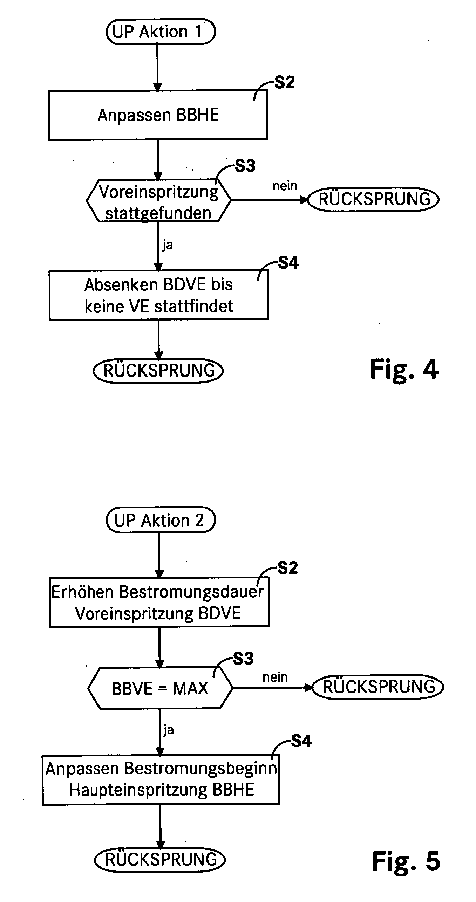

Liegt die Spritzverzug-Abweichung dSV innerhalb des Toleranzbands, Abfrage-Ergebnis S9: ja, so wird bei S10 festgestellt, dass eine Voreinspritzung VE stattgefunden hat. Damit ist dieser Programmteil beendet. Alternativ hierzu kann zu einem Unterprogramm UP Aktion 1 verzweigt werden, welches in Figur 4 dargestellt ist und in Verbindung mit dieser erläutert wird. Ergibt die Prüfung bei S9, dass die Spritzverzug-Abweichung dSV außerhalb des Toleranzbands liegt, Abfrage-Ergebnis S9: nein, so wird bei S11 festgestellt, dass keine Voreinspritzung VE stattgefunden hat. Danach wird zu einem Unterprogramm UP Aktion 2 verzweigt, welches in Figur 5 dargestellt ist und in Verbindung mit dieser erläutert wird. Damit ist dieser Programm-Ablaufplan beendet.

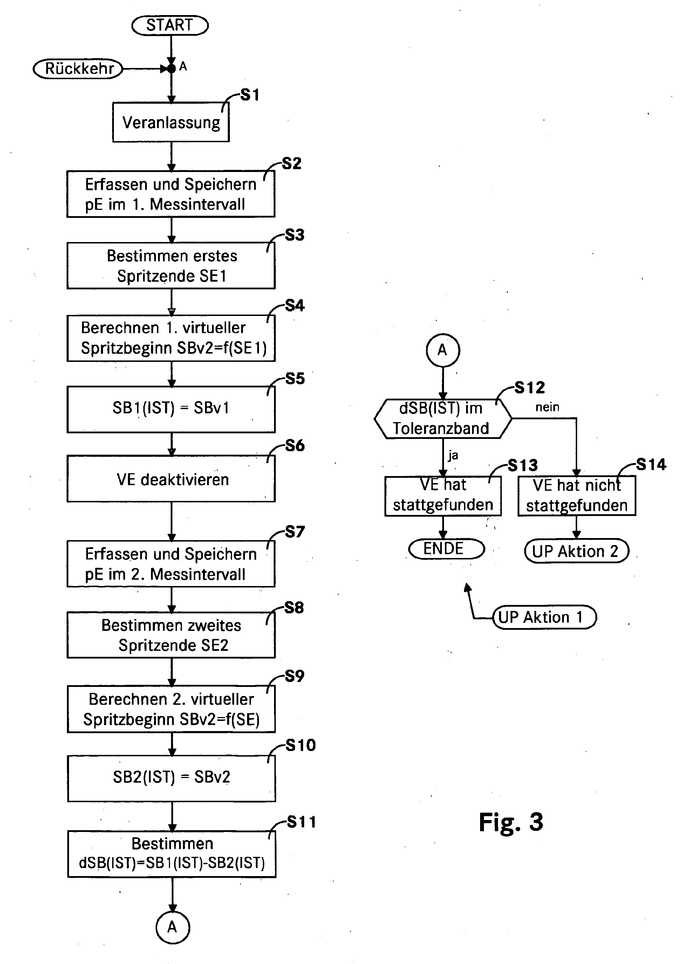

Die Figur 3 zeigt einen Programm-Ablaufplan der zweiten erfindungsgemäßen Lösung, bei welcher der Vergleich des Spritzbeginns mit Voreinspritzung zum Spritzbeginn ohne Voreinspritzung das zentrale Element darstellt. Die Schritte S1 bis S5 entsprechen den Schritten S1 bis S5 aus Figur 2 im gleichen Funktionsumfang. Bei S1 erfolgt die Veranlassung. Danach wird mit aktivierter Voreinspritzung VE bei S2 in einem ersten Messintervall der Einzelspeicher-Druckverlauf pE erfasst, gespeichert, bei S3 das erste Spritzende SE1 festgelegt, bei S4 der erste virtuelle Spritzbeginn SBv1 berechnet und bei S5 der erste Ist-Spritzbeginn SB1(IST) auf den Wert des ersten virtuellen Spritzbeginns SBv1 gesetzt. Bei S6 wird dann die Voreinspritzung VE deaktiviert. Bei S7 wird der Einzelspeicher-Druckverlauf in einem zweiten Messintervall erfasst, gespeichert, hieraus bei S8 ein zweites Spritzende SE2 festgelegt und bei S9 ein zweiter virtueller Spritzbeginn SBv2 berechnet. Im Anschluss wird bei S10 der zweite Ist-Spritzbeginn SB2(IST) auf den Wert des zweiten virtuellen Spritzbeginns SBv2 gesetzt. Aus dem ersten SB1(IST) und dem zweiten Ist-Spritzbeginn SB2(IST) wird dann bei S11 eine Ist-Spritzbeginnabweichung dSB(IST) berechnet.

Bei S12 wird geprüft, ob diese innerhalb eines Toleranzbands liegt. Ist dies der Fall, Abfrage-Ergebnis S12: ja, so wird bei S13 festgestellt, dass eine Voreinspritzung VE stattgefunden hat. Damit ist dieser Programmteil beendet. Alternativ kann auch zum Unterprogramm Aktion 1 verzweigt werden, siehe hierzu Figur 4. Ergibt die Prüfung bei S12, dass die Ist-Spritzbeginnabweichung dSB(IST) außerhalb des Toleranzbands liegt, Abfrage-Ergebnis S12: nein, so wird bei S14 festgestellt, dass keine Voreinspritzung stattgefunden hat und zum Unterprogramm Aktion 2 verzweigt, siehe hierzu Figur 5. Damit ist dieser Programm-Ablaufplan beendet.

Die Figur 4 zeigt das Unterprogramm Aktion 1, welches immer dann durchlaufen wird, wenn festgestellt wurde, dass eine Voreinspritzung VE stattgefunden hat. Bei S2 wird der Bestromungsbeginn der Haupteinspritzung BBHE an einen Sollwert angepasst. Bei S3 wird geprüft, ob mit dem veränderten Bestromungsbeginn entsprechend den Schritten S2 bis S11 der Figur 2 oder den Schritten S2 bis S14 der Figur 3 eine Voreinspritzung stattgefunden hat. Ist dies der Fall, Abfrage-Ergebnis S3: ja, so wird bei S4 die Bestromungsdauer der Voreinspritzung BDVE schrittweise so weit abgesenkt, bis bei der darauf folgenden Einspritzung keine Voreinspritzung VE mehr stattfindet. Danach wird in das Hauptprogramm (Figur 2 oder 3) zum Punkt A zurückverzweigt. Ergibt die Prüfung bei S3, dass keine Voreinspritzung VE stattgefunden hat, Abfrage-Ergebnis S3: nein, so erfolgt unmittelbar der Rücksprung in das entsprechende Hauptprogramm zum Punkt A.

In Figur 5 ist das Unterprogramm Aktion 2 dargestellt, welches immer dann durchlaufen wird, wenn festgestellt wurde, dass keine Voreinspritzung VE stattgefunden hat. Bei S2 wird die Bestromungsdauer der Voreinspritzung BDVE schrittweise so lange erhöht, bis bei der darauf folgenden Einspritzung eine Voreinspritzung festgestellt wird. Bei S3 erfolgt eine Grenzwert-Abfrage auf eine maximale Bestromungsdauer MAX. Ergibt die Prüfung bei S3, dass die maximale Bestromungsdauer MAX der Voreinspritzung VE erreicht wurde, ohne dass eine Voreinspritzung VE stattgefunden hat, Abfrage-Ergebnis S3: ja, so wird bei S4 der Bestromungsbeginn der Haupteinspritzung BBHE angepasst und zum entsprechenden Hauptprogramm zurück verzweigt. Wird bei S3 festgestellt, dass die maximale Bestromungsdauer MAX der Voreinspritzung VE nicht erreicht wurde, Abfrage-Ergebnis S3: nein, so wird in das entsprechende Hauptprogramm zum Punkt A zurück verzweigt.

### Bezugszeichen

- 1: Brennkraftmaschine
- 2: Niederdruck-Pumpe
- 3: Kraftstoff-Tank
- 4: Saugdrossel
- 5: Hochdruck-Pumpe
- 6: Rail
- 7: Einzelspeicher
- 8: Injektor
- 9: elektronisches Motorsteuergerät (ADEC)
- 10: Raildruck-Sensor

## Patentansprüche

1. Verfahren zur Erkennung einer Voreinspritzung bei einer Brennkraftmaschine (1) mit einem Common-Railsystem einschließlich Einzelspeichern (7), bei dem ein Einzelspeicher-Druckverlauf (pE) in einem Messintervall detektiert wird, hieraus ein Spritzende (SE) der Haupteinspritzung bestimmt wird, bei dem in Abhängigkeit des Spritzendes (SE) über eine mathematische Funktion ein virtueller Spritzbeginn (SBv) der Haupteinspritzung berechnet wird und bei dem der virtuelle Spritzbeginn (SBv) als Ist-Spritzbeginn (SB(IST)) der Haupteinspritzung gesetzt wird,
**dadurch gekennzeichnet,**
**dass** bei aktivierter Voreinspritzung für die Haupteinspritzung ein Ist-Spritzverzug (SV(IST)) in Abhängigkeit des Ist-Spritzbeginns (SB(IST)) bestimmt wird, eine Spritzverzug-Abweichung (dSV) von einem Soll-Spritzverzug (SV(SL)) zum Ist-Spritzverzug (SV(IST)) berechnet wird und anhand der Spritzverzug-Abweichung (dSV) festgelegt wird, ob eine Voreinspritzung (VE) stattgefunden hat.

2. Verfahren nach Anspruch 1,
**dadurch gekennzeichnet,**
**dass** eine Voreinspritzung stattgefunden hat, wenn die Spritzverzug-Abweichung (dSV) innerhalb eines Toleranzbands (TB) liegt.

3. Verfahren nach Anspruch 1,
**dadurch gekennzeichnet,**
**dass** keine Voreinspritzung stattgefunden hat, wenn die Spritzverzug-Abweichung (dSV) außerhalb des Toleranzbands (TB) liegt.

4. Verfahren nach Anspruch 1,
**dadurch gekennzeichnet,**
**dass** der Soll-Spritzverzug (SV(SL)) über ein Kennfeld in Abhängigkeit eines Raildrucks (pCR) und einer Motordrehzahl (nMOT) berechnet wird.

5. Verfahren zur Erkennung einer Voreinspritzung bei einer Brennkraftmaschine (1) mit einem Common-Railsystem einschließlich Einzelspeichern (7), bei dem ein Einzelspeicher-Druckniveau (pE) in einem ersten Messintervall detektiert wird, hieraus ein erstes Spritzende (SE1) der Haupteinspritzung bestimmt wird, bei dem in Abhängigkeit des ersten Spritzendes (SE1) über eine mathematische Funktion ein erster virtueller Spritzbeginn (SBv1) der Haupteinspritzung berechnet wird und bei dem der erste virtuelle Spritzbeginn (SBv1) als erster Ist-Spritzbeginn (SB1(IST)) der Haupteinspritzung gesetzt wird,
**dadurch gekennzeichnet,**
**dass** die Voreinspritzung deaktiviert wird, der Einzelspeicher-Druckverlauf (pE) in einem zweiten Messintervall detektiert wird, hieraus ein zweites Spritzende (SE2) der Haupteinspritzung bestimmt wird, in Abhängigkeit des zweiten Spritzendes (SE2) über eine mathematische Funktion ein zweiter virtueller Spritzbeginn (SBv2) der Haupteinspritzung berechnet wird, der zweite virtuelle Spritzbeginn (SBv2) als zweiter Ist-Spritzbeginn (SB2(IST)) der Haupteinspritzung gesetzt wird, eine Ist-Spritzbeginnabweichung (dSB(IST)) aus dem ersten Ist-Spritzbeginn (SB1(IST)) zum zweiten Ist-Spritzbeginn (SB2(IST)) berechnet wird und anhand der Ist-Spritzbeginnabweichung (dSB(IST)) festgelegt wird, ob eine Voreinspritzung (VE) stattgefunden hat.

6. Verfahren nach Anspruch 5,
**dadurch gekennzeichnet,**
**dass** ein Voreinspritzung stattgefunden hat, wenn die Ist-Spritzbeginnabweichung (dSB(IST)) innerhalb eines Toleranzbands (TB) liegt.

7. Verfahren nach Anspruch 5,
**dadurch gekennzeichnet,**
**dass** keine Voreinspritzung stattgefunden hat, wenn die Ist-Spritzbeginnabweichung (dSB(IST)) außerhalb des Toleranzbands (TB) liegt.

8. Verfahren nach Anspruch 3 oder 7,
**dadurch gekennzeichnet,**
**dass** mit Erkennen, dass keine Voreinspritzung stattgefunden hat, eine Bestromungsdauer der Voreinspritzung (BDVE) ausgehend von einem ersten Wert schrittweise solange erhöht wird bis erkannt wird, dass eine Voreinspritzung stattgefunden hat.

9. Verfahren nach Anspruch 8,
**dadurch gekennzeichnet,**
**dass** die Bestromungsdauer der Voreinspritzung (BDVE) bis auf einen Maximalwert (MAX) erhöht wird und mit Erkennen, dass beim Maximalwert (MAX) immer noch keine Voreinspritzung stattgefunden hat, ein Bestromungsbeginn der Haupteinspritzung (BBHE) vergrößert wird.

10. Verfahren nach Anspruch 2 oder 6,
**dadurch gekennzeichnet,**
**dass** mit Erkennen, dass eine Voreinspritzung stattgefunden hat, der Bestromungsbeginn der Haupteinspritzung (BBHE) angepasst wird.
